Europäisches Patentamt

European Patent Office

Office européen des brevets

(19)

(11) **EP 0 940 902 A1**

(12) **EUROPÄISCHE PATENTANMELDUNG**

(43) Veröffentlichungstag:
08.09.1999 Patentblatt 1999/36

(51) Int. Cl.⁶: **H02J 3/42**, H02P 9/14

(21) Anmeldenummer: 99103166.7

(22) Anmeldetag: 18.02.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 02.03.1998 AT 36398

(71) Anmelder: Va Tech Elin GmbH
1140 Wien (AT)

(72) Erfinder:
• Strobl, Jörg Dipl.-Ing.
2380 Perchtoldsdorf (AT)
• Riss, Johannes, Dipl.-Ing. Dr.
2201 Gerasdorf (AT)

(74) Vertreter:
Rieberer, Stefan, Dipl.-Ing.
c/o VA TECH Patente GmbH,
Serravagasse 10
1140 Wien (AT)

(54) **Verfahren zur Parallelschalten von Synchrongeneratoren und Einrichtung zur Durchführung des Verfahrens**

(57) Ein Verfahren und eine Vorrichtung zum Parallelschalten von Synchrongeneratoren an ein elektrisches Netz, bei welchem die Frequenz und die Phasenlage der Generator- und der Netzspannung bzw. die Differenz der Frequenzen und Phasenlagen dieser Spannungen ermittelt und die Frequenz bzw. die Phasenlage der Generatorspannung an die entsprechenden Größen der Netzspannung angeglichen werden, wobei ein aus der Bestimmung der Frequenz und Phasenlage bzw. der Differenz der Frequenz und Phasenlage ermitteltes Signal (Fr.Diff, Fr.Diff.1) zur Steuerung der Erregerspannung oder des Erregerstromes herangezogen wird, um durch Steuerung der spannungsabhängigen Verluste des Generators (1) die Frequenz und/oder die Phasenlage der Generatorspannung ($U_{Gen}$) zu beeinflussen, und wonach der Generator bei Erreichen eines bestimmten Synchronisationszustandes an das Netz angeschalten wird.

Dadurch kann die Regelung der Frequenz und Phase des Generators -anstelle der bisherigen Drehzahlregelung der Antriebsmaschine- über wesentlich besser und rascher beherrschbare elektrische Größen des Generators, nämlich über die spannungsabhängigen Verluste (Eisenverluste, Erregerverluste), rasch und exakt reproduzierbar durchgeführt werden.

Fig. 1

EP 0 940 902 A1

**Beschreibung**

Die vorliegende Erfindung betrifft ein Verfahren und eine Einrichtung zum Parallelschalten von Synchrongeneratoren an ein elektrisches Netz, bei welchem die Frequenz und die Phasenlage der Generator- und der Netzspannung bzw. die Differenz der Frequenzen und Phasenlagen dieser Spannungen ermittelt, die Frequenz bzw. die Phasenlage der Generatorspannung an die entsprechenden Größen der Netzspannung angeglichen werden und der Generator bei Erreichen eines bestimmten Synchronisationszustandes an das Netz angeschalten wird.

Einrichtungen zum Parallelschalten von Synchrongeneratoren an ein Netz sind bereits bekannt. Bei diesen bekannten Einrichtungen werden die Amplituden und Frequenzen bzw. Phasenlagen der Spannungen von Generator und Netz bzw. deren Differenzen gemessen. Zum Parallelschalten müssen mehrere Bedingungen erfüllt sein, nämlich

-   die Differenz zwischen den beiden Frequenzen muß hinreichend klein sein und
-   der Phasenwinkel zwischen den beiden Spannungen muß hinreichend klein sein.
-   zumeist wird auch verlangt, daß die Differenz zwischen den beiden Spannungsamplituden hinreichend klein ist,

Das Parallelschaltgerät überprüft diese Bedingungen und erteilt einen Einschaltbefehl an den Generator-Leistungsschalter, sobald diese Bedingungen erfüllt sind.

Um den erforderlichen Zustand herzustellen, kann das Parallelschaltgerät üblicherweise Befehle an die Spannungssollwerteinstellung für die Erregereinrichtung und in jedem Fall Befehle an die Drehzahlsollwerteinstellung der Antriebsmaschine abgeben, wobei diese Sollwertvorgabe solange erfolgt, bis die Differenzen für Amplitude, Frequenz und Phasenwinkel ausreichend klein sind.

Der Abgleich der Frequenz und des Phasenwinkels ist bei bekannten Einrichtungen schwierig, da die Regelung der Turbinendrehzahl als maschinenbauliche Einrichtung große Massen des Antriebsmediums der Turbine (Wasser, Dampf, Gas,...) und die Verstelleinrichtung (Düsennadel, Strahlablenker, Leitapparat, Schaufelverstellung, Dampfregelventil, ...) beeinflussen muß. Dabei treten unerwünschte Erscheinungen, wie Reibungsverluste, Totgänge u.dgl. auf, durch welche dieser Prozeß schwierig zu beherrschen ist. Daraus folgt, daß der Synchronisiervorgang in wenigen Fällen optimal erfolgt, sondern häufig dem Zufall überlassen bleibt. Jedenfalls vergeht in unerwünschter Weise viel Zeit, bis das Parallelschaltgerät einen hinreichenden Synchronisationszustand erreicht hat. Die Synchronisation der Frequenz und der Phase ist jedoch besonders wichtig, da ansonsten bei Anschalten des Generators ein hohes, die Maschine beanspruchendes Drehmoment auftritt.

Es ist daher eine Aufgabe der vorliegenden Erfindung, ein Verfahren zur Synchronisation bzw. eine Einrichtung zur Durchführung dieses Verfahrens so zu verbessern, daß der Synchronisationszustand rascher und mit höherer Zuverlässigkeit erreicht werden kann. Die Verbesserung des Parallelschaltgerätes sollte möglichst einfach und kostengünstig durchgeführt werden können und gegebenenfalls in bestehende Anlagen integrierbar sein.

Diese Aufgaben werden ausgehend von einem Verfahren der eingangs genannten Art erfindungsgemäß dadurch gelöst, daß ein aus der Bestimmung der Frequenz und Phasenlage bzw. der Differenz der Frequenz und Phasenlage ermitteltes Signal zur Steuerung der Erregerspannung oder des Erregerstromes herangezogen wird, um durch Steuerung der spannungsabhängigen Verluste des Generators die Frequenz und/oder die Phasenlage der Generatorspannung zu beeinflussen. Eine Einrichtung zur Durchführung des erfindungsgemäßen Verfahrens, bei welcher das Mittel zur Bestimmung der Frequenz und der Phasenlage bzw. der Differenz der Frequenz und der Phasenlage dazu eingerichtet ist, ein Ausgangssignal zu liefern, ist erfindungsgemäß dadurch gekennzeichnet, daß dieses Ausgangssignal dem Mittel zum Steuern der Erregerspannung bzw. des Erregerstromes des Generators zugeführt ist, mittels welchem die Frequenz und/oder die Phasenlage der Generatorspannung infolge ihrer Abhängigkeit von den spannungsabhängigen Verlusten des Generators im Sinne eines möglichst raschen Abgleichs beeinflußbar ist.

Bei der vorliegenden Erfindung wird von dem Umstand Gebrauch gemacht, daß eine Änderung der Generatorspannung eine Änderung der Verlustleistung hervorruft. Davon sind vor allem die Eisenverluste und die Erregerverluste des Generators, welche nahezu quadratisch von der Spannung abhängig sind, betroffen. Im Leerlaufbetrieb bei konstanter Drehzahl besteht Gleichgewicht zwischen der von der Antriebsmaschine dem Generator zugeführten Leistung und den Leistungsverlusten. Wird bei konstanter Antriebsleistung die Generatorspannung verändert, z.B. reduziert, so ändern, z.B. verringern sich die Verluste und der Maschinensatz wird beschleunigt. Es ist demnach möglich, die Drehzahl des Generators durch die Erregereinrichtung über Polradstrom, Generatorspannung und Verlustleistung zu beeinflussen, sodaß durch Änderung der Generatorspannung auch eine Änderung der Frequenz bzw. Phase des Generators erzielt werden kann und auf diese Weise anstelle oder zusätzlich zum Spannungsabgleich auch ein Abgleich der Frequenz bzw. der Phase des Generators mit dem Netz möglich ist. Die erfindungsgemäße Lösung besitzt den Vorteil, daß die Regelung der Frequenz und Phase des Generators - anstelle der bisherigen Drehzahlregelung der Antriebsmaschine- über wesentlich besser und rascher beherrschbare elektrische Größen des Generators, nämlich über die spannungsabhängigen Verluste (Eisenverluste, Erregerverluste), exakt reproduzierbar durchgeführt werden kann. Die damit verbundene Spannungsänderung des Generators kann bis zu einem gewissen Ausmaß in Kauf genommen werden, da diese für das Anschalten weniger kritisch als die Frequenz- und Phasenlage ist. Es ist somit auch möglich, von der Antriebsmaschine verursachte Störgrößen durch rasche Veränderung der Generatorspannung zu kompensieren, sodaß die Frequenzdifferenz auf einen phasenwinkelabhängigen Frequenzdifferenz-Sollwert (z.B. geringere Frequenzdifferenz bei sich verringernder Phasendifferenz) eingeregelt werden kann, welcher ein rasches und zuverlässiges Erreichen des Synchronpunktes ermöglicht.

Wie bereits erwähnt, wird bei der Synchronisierung der Frequenz und Phase eine Veränderung der Generatorspannung gegenüber der Netzspannung in Kauf genommen. Hierbei sind die folgenden Fälle zu unterscheiden:

a) Die Spannungsdifferenz bleibt so klein, daß sie die Synchronisationsbedingungen nach wie vor erfüllt, sodaß keine weiteren Regelschritte erforderlich sind.

$b_1$) Falls die Spannungsdifferenz die Synchronisationsbedingungen nicht erfüllt, kann kurz vor Erreichen des Synchronisationspunktes die Spannung abrupt durch Änderung des Erregerstromes auf den gewünschten Wert eingeregelt werden, wobei der Maschinensatz aufgrund seines Trägheitsmoments trotz Änderung der Verlustleistung bis zum Erreichen des Synchronisationspunktes die Drehzahl weitgehend beibehält.

$b_2$) Falls die Spannungsdifferenz die Synchronisationsbedingungen nicht erfüllt, können die Generatorverluste bereits vor Einregelung der Generatorspannung antizipierend so dosiert werden, daß nach dem Spannungsabgleich die gewünschte Frequenzdifferenz vorliegt, welche ein rasches Erreichen des Synchronisationspunktes ermöglicht.

Wenn die Antriebsmaschine, z.B. die Turbine, nicht mit einer Öffnungsbegrenzung, das heißt, mit konstanter Leistungszufuhr, betrieben wird, sondern mittels eines Reglers, z.B. eines Turbinenreglers, kann das aus der Bestimmung der Frequenz und der Phasenlage bzw. der Differenz der Frequenz und Phasenlage resultierende Signal zur Regelung der Drehzahl der mit dem Generator verbundenen Turbine erfindungsgemäß in der Weise herangezogen werden, daß die durch das Mittel zum Steuern der Erregerspannung bzw. des Erregerstromes bewirkte Beeinflussung der Frequenz und Phasenlage der Generatorspannung durch ein Mittel zur Regelung der Drehzahl der Antriebsmaschine nicht oder gegebenenfalls nur in einem eingeschränkten Maß rückgängig gemacht wird. Bei einer erfindungsgemäßen Einrichtung ist in diesem Fall vorgesehen, daß das Mittel zur Bestimmung der Frequenz und der Phasenlage bzw. der Differenz der Frequenz und Phasenlage dazu eingerichtet ist, ein Ausgangssignal zu liefern, welches an den Eingang des Mittels zum Regeln der Drehzahl der mit dem Generator verbundenen Antriebsmaschine in der Weise anlegbar ist, daß die Beeinflussung der Frequenz und Phasenlage der Generatorspannung durch das Mittel zum Steuern der Erregerspannung bzw. des Erregerstromes nicht oder gegebenenfalls in einem eingeschränkten Maß rückgängig gemacht wird. Dadurch kann vermieden werden, daß der Turbinenregler versucht, die Drehzahl der Turbine konstant zu halten und somit die mittels des erfindungsgemäßen Verfahrens hervorgerufene Änderung der Turbinendrehzahl durch eine Änderung der Leistungszufuhr auszugleichen.

Falls sich der Spannungssollwert vor Erreichen des Synchronisationspunktes für die Frequenz nicht mehr innerhalb des zulässigen Bandes befindet, kann im Rahmen der vorliegenden Erfindung vorgesehen sein, daß aus der Bestimmung der Spannung bzw. der Spannungsdifferenz der Generator- und der Netzspannung ein Signal gebildet wird, welches zur Nachregelung der Drehzahl der Turbine herangezogen wird, soferne die Differenz der Netz- und Generatorspannung einen vorgegebenen Maximalwert erreicht oder überschreitet. Dadurch kann sichergestellt werden, daß die Drehzahl durch die Turbinenregelung ständig so weit nachgeregelt wird, daß sich die Generatorspannung immer innerhalb eines zulässigen Bandes befindet, innerhalb welchem die Synchronisationsbedingungen erfüllt sind, wobei angestrebt wird, daß die Generatorspannung nach Möglichkeit in der Mitte dieses Bandes liegt, wo überdies ein Spannungsabgleich mit der Netzspannung vorliegt. Somit wirken bei dieser Ausführungsvariante das Signal betreffend den Spannungssollwert auf die Turbinenregelung und das Signal betreffend den Frequenz-Sollwert auf die Erregung.

Bei einer Weiterentwicklung des obigen Verfahrens kann aus der Bestimmung der Frequenz und der Phasenlage bzw. der Differenz der Frequenz und Phasenlage ein Grobsignal gebildet werden, welches einer Sollwerteinstellung eines Drehzahlgebers oder einer Öffnungsbegrenzung der mit dem Generator verbundenen Antriebsmaschine herangezogen wird, und aus der Bestimmung der Frequenz und Phasenlage bzw. der Differenz der Frequenz und Phasenlage ein Feinsignal gebildet werden, welches zur Steuerung der Erregerspannung bzw. des Erregerstromes herangezogen wird. Bei einer entsprechenden erfindungsgemäßen Einrichtung ist das Mittel zur Bestimmung der Frequenz und Phasenlage bzw. der Differenz der Frequenz und Phasenlage dazu eingerichtet, ein Grobsignal zu liefern, welches an eine Sollwerteinstellung eines Drehzahlreglers oder an eine Öffnungsbegrenzung der mit dem Generator verbundenen Antriebsmaschine angelegt ist, und das Mittel zur Bestimmung der Frequenz und Phasenlage bzw. der Differenz der Frequenz und Phasenlage dazu eingerichtet, ein Feinsignal zu liefern, welches dem Mittel zum Steuern der Erregerspannung bzw. des Erregerstromes zugeführt ist.

Im Rahmen der vorliegenden Erfindung kann auch ein Nachrüsten bestehender Einrichtungen vorgesehen sein. Bei bestehenden Erregereinrichtungen ist es oft nicht möglich, auf die internen Signale der Erregereinrichtung einzuwirken. Es besteht zwar die Möglichkeit, den Motorantrieb des Sollwertpotentiometers zu beeinflussen, was jedoch in der Regel zu langsam ist. Um die Erfindung auch an solchen bestehenden Einrichtungen anwenden zu können ist vorgesehen, daß aus der Bestimmung der Frequenz und Phasenlage bzw. der Differenz der Frequenz und Phasenlage ein Signal gebildet wird, mittels welchem der einer Spannungsregelungseinrichtung für die Generatorspannung zugeführte Generatorspannungs-Istwert in Abhängigkeit von der Frequenz und Phasenlage bzw. der Differenz der Frequenz und Phasenlage modifiziert wird, und daß aus der Differenz zwischen dem Generatorspannungs-Sollwert (Netzspannung) und dem modifizierten Generatorspannungs-Istwert ein Ausgangssignal gebildet wird, welches zur Steuerung der Erregerspannung bzw. des Erregerstromes herangezogen wird, um die Frequenz und/oder Phasenlage der Generatorspannung zu beeinflussen. Bei einer Einrichtung zum Durchführen dieses Verfahrens weist das Mittel zur Bestimmung der Frequenz und Phasenlage bzw. der Differenz der Frequenz und Phasenlage ein Mittel zum Modifizieren der einer Spannungsregelungseinrichtung zugeführte Generatorspannungs-Istwert auf, mittels welchem der Istwert der Generatorspannung in Abhängigkeit von der Frequenz und Phasenlage bzw. der Differenz der Frequenz und Phasenlage in der Weise modifizierbar ist, daß aufgrund der Differenz zwischen dem Generatospannungs-Sollwert (Netzspannung) und dem modifizierten Istwert der Generatorspannung ein Ausgangssignal herstellbar ist, welches dem Mittel zum Steuern der Erregerspannung bzw. des Erregerstromes zuführbar ist. Das Mittel zum Modifizieren der Generatorspannung wird vorzugsweise durch anschaltbare Widerstände gebildet. Somit kann die Erregereinrichtung über den Umweg der Beeinflussung des Generatorspannungs-Istwertes in der erfindungsgemäß vorgesehenen Weise geregelt werden, wobei die Generatorverluste wiederum die Frequenzdifferenz beeinflussen.

Ein besonderer Vorteil der vorliegenden Erfindung liegt darin, daß der Synchronisationsvorgang überwiegend durch elektrische Einrichtungen und somit durch elektrische Größen gesteuert wird, die mathematisch exakter erfaßbar sind als mechanische Einrichtungen und deren Steuergrößen, die mit Reibungs- und Totgangseffekten behaftet sind. Überdies können elektrische Größen rascher und genau reproduzierbar beeinflußt werden.

Vorgabe für den Abgleichvorgang ist, daß die Leerlaufverluste eines Maschinensatzes durch Änderung der Generatorspannung geändert werden sollen. Die Eisenverluste und die Erregerverluste hängen nahezu quadratisch von der Spannung ab.

Die Änderung $\Delta V$ der Verlustleistung steht daher mit der Änderung $\Delta U$ der Generatorspannung U in folgendem Zusammenhang:

$$(V_{Fe} + V_{Err}) + \Delta V = (V_{Fe} + V_{Err}) \cdot \left(1 + \frac{\Delta U}{U}\right)^2,$$

wobei $V_{Fe}$ die Eisenverluste und $V_{Err}$ die Erregerverluste sind.

Bei kleinen Änderungen von $\Delta U$ ergibt sich:

$$\Delta V = (V_{Fe} + V_{Cu}) \cdot 2 \cdot \frac{\Delta U}{U}$$

Die Änderung der Verluste bewirken eine Änderung $\Delta M$ des Drehmoments M wie folgt:

$$\Delta M = \frac{\Delta V}{\omega},$$

wobei $\omega$ die mechanische Winkelgeschwindigkeit des Generators ist.

Durch diese Drehmoment-Änderung wird der Maschinensatz folgendermaßen beschleunigt bzw. verzögert:

$$\Delta M = I \cdot \frac{d\omega}{dt},$$

wobei I das Trägheitsmoment des gesamten Maschinensatzes ist.

Durch Gleichsetzen der Drehmoment-Änderungen erhält man die Winkelbeschleunigung:

$$\frac{d\omega}{dt} = \frac{\Delta V}{I \cdot \omega}$$

Der Zusammenhang zwischen der Frequenz der Generatorspannung mit der mechanischen Winkelgeschwindigkeit lautet:

$$f = \frac{\omega \cdot p}{2\pi},$$

wobei p die Polpaarzahl des Generators ist.

Die durch die Spannungsänderung bewirkte Frequenzänderung pro Zeiteinheit ergibt sich demnach wie folgt:

$$\frac{df}{dt} = (V_{Fe} + V_{Err}) \cdot \frac{p}{\pi \cdot I \cdot \omega} \cdot \left(\frac{\Delta U}{U}\right)$$

Weitere Vorteile und Merkmale der vorliegenden Erfindung ergeben sich aus der nachfolgenden Beschreibung nicht einschränkender Ausführungsbeispiele für erfindungsgemäße Einrichtungen, mittels welchen das erfindungsgemäßen Verfahren durchgeführt werden kann, wobei auf die beiliegenden Figuren Bezug genommen wird, die folgendes zeigen:

Fig. 1 ein Ausführungsbeispiel einer erfindungsgemäßen Einrichtung, bei welcher die Abgleichung der Frequenz durch Steuerung der Erregereinrichtung erfolgt,

Fig. 2 eine Ausführungsvariante der Einrichtung von Figur 1, bei welcher zur Abgleichung die Drehzahlregelung des Maschinensatzes miteinbezogen wird,

Fig. 3 eine weitere Ausführungsvariante der Einrichtung gemäß Figur 1, bei welcher zur Abgleichung ebenso die Drehzahlregelung des Maschinensatzes miteinbezogen wird und

Fig. 4 ein weiteres Ausführungsbeispiel einer erfindungsgemäßen Einrichtung, welche zur Nachrüstung bestehender Anlagen besonders geeignet ist.

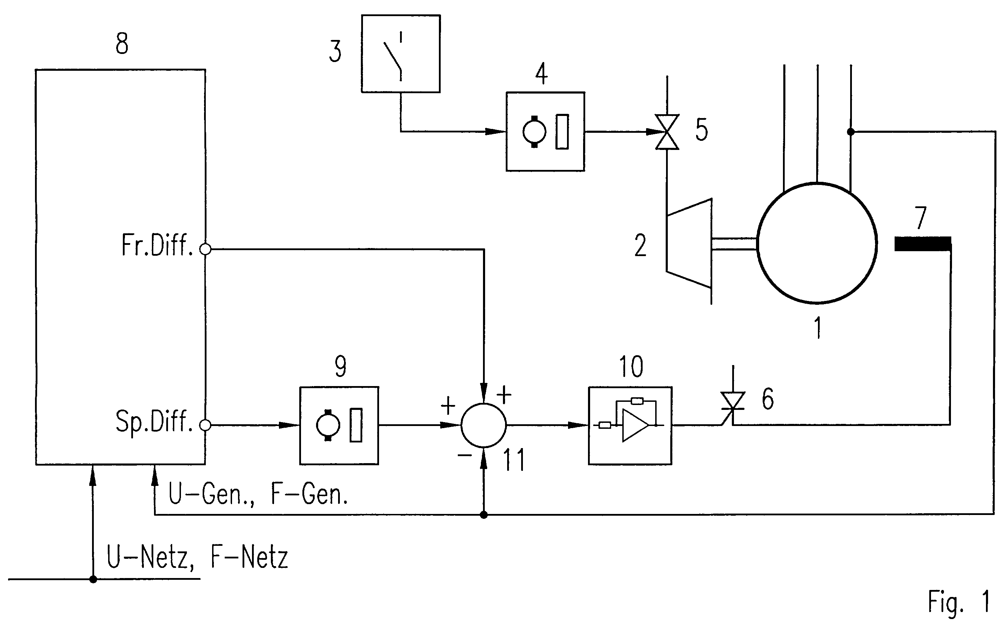

Im folgenden wird auf die Figur 1 Bezug genommen, in welcher ein Generator 1 dargestellt ist, welcher von einer Turbine 2 angetrieben wird. Die Drehzahl derselben wird beim Anfahren des Maschinensatzes von einer Startautomatik 3 über ein Motorpotentiometer 4, welches die Öffnungsbegrenzung vorgibt, und über ein Stellorgan 5 (Regelventil, Düsennadel, Leitapparat, etc. ...) auf etwa Nenndrehzahl eingestellt. Weiters schaltet die Startautomatik 3 die Erregereinrichtung 6 ein, welche etwa den Leerlauf-Nennerregerstrom auf die Polradwicklung 7 bringt.

Sobald der Generator 1 etwa Nennspannung erreicht hat, schaltet die Startautomatik 3 das automatische Parallelschaltgerät 8 ein. An diesem liegt sowohl die Generatorspannung $U_{Gen}$ als auch die Netzspannung $U_{Netz}$ an hierfür vorgesehenen Eingängen an. Diese Signale sind Wechselspannungen und beinhalten daher auch die Information über die Frequenzen $F_{Gen}$ und $F_{Netz}$ sowie deren Phasenlagen. Das Gerät 8 bildet daraus ein aus der Spannungsdifferenz abgeleitetes Signal Sp.Diff., welches beispielsweise aus „Höher"-

und „Tiefer"-Impulsen besteht und dem motorbetätigten Spannungssollwertpotentiometer 9 zugeführt ist. Letzteres beeinflußt den Spannungsregler 10 in der Weise, daß die Generatorspannung $U_{Gen}$ an die Netzspannung $U_{Netz}$ angeglichen wird. Sobald dies geschehen ist, wird das Signal Sp.Diff nicht mehr an das Spannungssollwertpotentiometer 9 angelegt. Dieses verbleibt also in der eingeregelten Stellung.

Weiters bildet das Gerät 8 ein aus der Frequenzdifferenz und dem Phasenwinkel der beiden Spannungen abgeleitetes Signal Fr.Diff., welches beispielsweise ein Analogsignal ist und der Soll-Istwert-Differenzbildung 11 für die Generatorspannung $U_{Gen}$ zugeführt ist. Dort beeinflußt es den Spannungsregler 10 in der Weise, daß bei einer zu kleinen Generatordrehzahl die Generatorspannung $U_{Gen}$ herabgesetzt wird, worauf die Verlustleistung sinkt und die Drehzahl steigt. Bei einer zu großen Generatordrehzahl läuft der Vorgang sinngemäß mit umgekehrtem Vorzeichen ab. Auf diese Art kann die Generatordrehzahl so beeinflußt werden, daß der Synchronisationspunkt rasch erreicht wird, und daß sodann bei Annäherung an diesen die Frequenz- und Phasendifferenz klein genug wird, um ein Zuschalten zu erlauben.

Das automatische Parallelschaltgerät 8 enthält heute üblicherweise einen (nicht dargestellten) Mikroprozessor samt der notwendigen Peripherie bzw. einen Mikrorechner oder einen ASIC-Baustein. Durch entsprechende Programmierung desselben kann die Durchführung des erfindungsgemäßen Verfahrens optimiert werden.

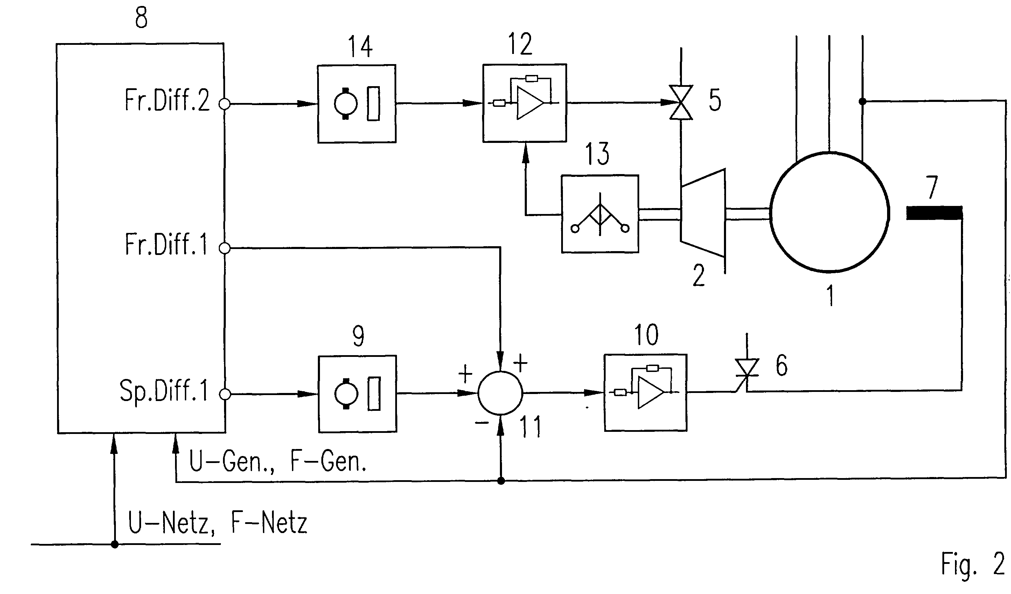

Zur Beschreibung der Figuren 2 bis 4 werden für dieselben Merkmale und Komponenten dieselben Bezugszeichen verwendet und diese nachstehend nicht nochmals im Detail erläutert.

In Fig. 2 wird das Stellorgan 5 durch den Drehzahlregler 12 angesteuert, der von dem Drehzahlgeber 13 (z.B. ein Fliehkraftpendel) mit seinem Istwert versorgt wird. Zusätzlich zu dem Signal Fr.Diff.1, das -wie bei dem Ausführungsbeispiel gemäß Fig. 1 - der Soll-Istwert-Differenzbildung 11 des Spannungsreglers 10 zugeführt ist, wird ein zweites, aus der Frequenzdifferenz und dem Phasenwinkel der beiden Spannungen abgeleitetes Signal Fr.Diff.2 gebildet, welches beispielsweise aus „Höher"- und „Tiefer"-Impulsen besteht und den Motor des Sollwertpotentiometers 14 des Drehzahlreglers 12 ansteuert. Das Signal Fr.Diff.1 beeinflußt über die Generatorspannung $U_{Gen}$ rasch und exakt die Drehzahl im Sinne des erfindungsgemäßen Verfahrens, wogegen der Drehzahlregler 12, der in gewöhnlicher Weise dafür ausgelegt ist, die Drehzahl wieder auf den vorgegebenen, konstanten Wert zu bringen, mittels des Signals Fr.Diff.2 über sein Sollwertpotentiometer 14 daran gehindert wird.

Bei der Anordnung gemäß Fig. 2 ergibt sich außerdem die Möglichkeit, zu Beginn des Synchronisiervorganges mit Hilfe des Signals Sp.Diff. in herkömmlicher Weise zunächst auf kleine Spannungsdifferenz und mit Hilfe des Signals Fr.Diff.2 auf kleine Frequenzdifferenz abzugleichen, um einen Grobabgleich zu erreichen.

Sobald dies geschehen ist, wird - wie bei dem Ausführungsbeispiel von Fig. 1- das Signal Sp.Diff. entaktiviert. Die Signale Fr.Diff.1 und Fr.Diff.2 hingegen werden in der weiter oben beschriebenen Weise aktiviert. Das Signal Fr.Diff.1 bewirkt sodann den Feinabgleich von Frequenzdifferenz und Phasenwinkel durch Beeinflussung der Generatorspannung $U_{Gen}$ gemäß der Erfindung, wogegen das Signal Fr.Diff.2 gegebenenfalls ein mechanisches Nachregeln des Maschinensatzes verhindert, das die Beeinflussung rückgängig machen würde.

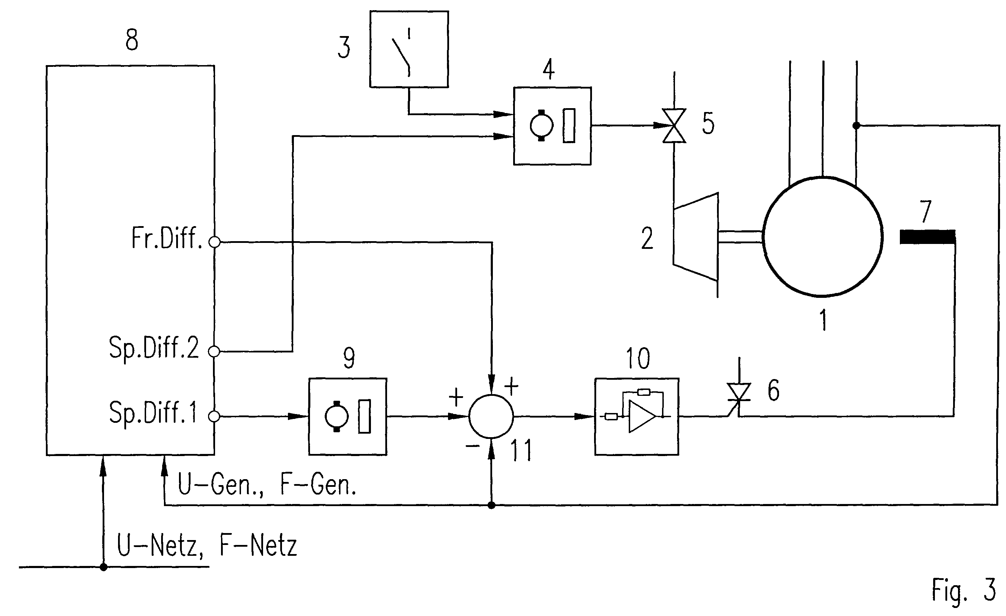

Bei der Ausführungsvariante von Fig. 3 wird außer dem Signal Sp.Diff.1 ein zweites aus der Spannungsdifferenz abgeleitetes Signal Sp.Diff.2 gebildet, das beispielsweise aus „Höher"-und „Tiefer"-Impulsen besteht und dem Motorpotentiometer 4 für die Öffnungsbegrenzung (oder im Fall der Figur 2 dem Motorpotentiometer 14 für den Drehzahlsollwert) zugeführt ist. Falls bei der Änderung der Drehzahl mit Hilfe der Generatorspannung $U_{Gen}$, diese letztere die Grenzen des für das Zuschalten erlaubten Bandes zu überschreiten droht, wird durch das Signal Sp.Diff.2 die Drehzahl des Maschinensatzes mechanisch auf einen neuen Wert geregelt. Durch das Signal Fr.Diff. wird eine solche Änderung der Drehzahl durch Beeinflussung der Generatorspannung $U_{Gen}$ verhindert, wodurch diese wieder in die Mitte des zulässigen Bandes rückt.

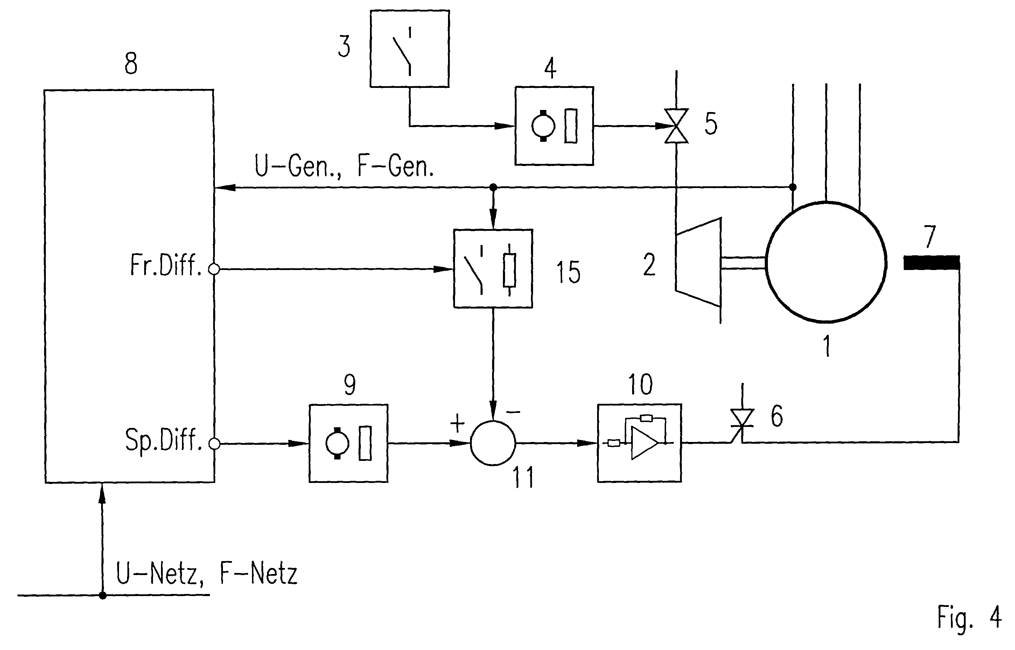

Bei dem Ausführungsbeispiel von Fig. 4 wird die Generatorspannung $U_{Gen}$ über die Erregung 6 in der Weise mit dem Signal Fr.Diff. beeinflußt, daß dieses Signal Fr.Diff., welches beispielsweise aus „Höher"- und „Tiefer"-Impulsen besteht, einer Schaltung 15 zugeführt ist, wo - z. B. über Relaiskontakte - Widerstände im Istwertkreis des Spannungsreglers zu- und weggeschaltet werden.

Dieses Ausführungsbeispiel ist insbesondere dann vorteilhaft, wenn das erfindungsgemäße Parallelschaltgerät bzw. das Verfahren an einer bestehenden Anlage nachgerüstet werden soll, an welcher die internen Signale der Erregung nicht zugänglich sind.

**Patentansprüche**

1. Verfahren zum Parallelschalten von Synchrongeneratoren an ein elektrisches Netz, bei welchem die Frequenz und die Phasenlage der Generator- und der Netzspannung bzw. die Differenz der Frequenzen und Phasenlagen dieser Spannungen ermittelt, die Frequenz bzw. die Phasenlage der Generatorspannung an die entsprechenden Größen der Netzspannung angeglichen werden und der Generator bei Erreichen eines bestimmten Synchronisationszustandes an das Netz angeschaltet wird, **dadurch gekennzeichnet, daß** ein aus der Bestimmung der Frequenz und Phasenlage bzw. der Differenz der Frequenz und Phasenlage ermitteltes Signal (Fr.Diff, Fr.Diff.1) zur Steuerung der Erregerspannung oder des Erregerstromes herangezogen wird, um durch Steuerung der spannungsabhängigen Verluste des Generators (1) die Frequenz und/oder die Phasenlage der Generatorspannung ($U_{Gen}$) zu beeinflussen.

2. Verfahren nach Anspruch 1, **dadurch gekennzeichnet, daß** das aus der Bestimmung der Frequenz und der Phasenlage bzw. der Differenz der Frequenz und Phasenlage resultierende Signal (Fr.Diff.2) zur Regelung der Drehzahl der mit dem Generator (1) verbundenen Antriebsmaschine in der Weise herangezogen wird, daß die durch die Steuerung der Erregerspannung bzw. des Erregerstromes bewirkte Beeinflussung der Frequenz und Phasenlage der Generatorspannung ($U_{Gen}$) durch ein Mittel (5, 12, 13, 14) zur Regelung der Drehzahl der Antriebsmaschine nicht oder gegebenenfalls nur in einem eingeschränkten Maß rückgängig gemacht wird.

3. Verfahren nach Anspruch 1 oder 2, **dadurch gekennzeichnet, daß** aus der Bestimmung der Frequenz und der Phasenlage bzw. der Differenz der Frequenz und Phasenlage ein Grobsignal gebildet wird, welches zu einer Sollwerteinstellung eines Drehzahlgebers oder zu einer Öffnungsbegrenzung der mit dem Generator verbundenen Antriebsmaschine herangezogen wird, **und daß** aus der Bestimmung der Frequenz und Phasenlage bzw. der Differenz der Frequenz und Phasenlage ein Feinsignal gebildet wird, welches zur Steuerung der Erregerspannung bzw. des Erregerstromes herangezogen wird.

4. Verfahren nach Anspruch 1, 2 oder 3, **dadurch gekennzeichnet, daß** aus der Bestimmung der Spannung bzw. der Spannungsdifferenz der Generator- und der Netzspannung ein Signal (Sp.Diff.2) gebildet wird, welches zur Nachregelung der Drehzahl der Antriebsmaschine des Generators (1) mittels eines Drehzahlreglers oder einer Öffnungsbegrenzung herangezogen wird, soferne die Differenz der Netz- und Generatorspannung einen vorgegebenen Maximalwert erreicht oder überschreitet.

5. Verfahren nach einem der Ansprüche 1 bis 4, **dadurch gekennzeichnet, daß** aus der Bestimmung der Frequenz und Phasenlage bzw. der Differenz der Frequenz und Phasenlage ein Signal (Fr.Diff.) gebildet wird, mittels welchem der einer Spannungsregelungseinrichtung für die Generatorspannung zugeführte Generator-spannungs-Istwert ($U_{Gen}$) in Abhängigkeit von der Frequenz und Phasenlage bzw. der Differenz der Frequenz und Phasenlage modifiziert wird, **und daß** aus der Differenz zwischen dem Generatorspannungs-Sollwert (Netzspannung) und dem modifizierten Generatorspannungs-Istwert ein Ausgangssignal gebildet wird, welches zur Steuerung der Erregerspannung bzw. des Erregerstromes herangezogen wird, um die Frequenz und/oder Phasenlage der Generatorspannung ($U_{Gen}$) zu beeinflussen.

6. Einrichtung zum Parallelschalten von Synchrongeneratoren an ein elektrisches Netz mit einem Mittel (8) zur Bestimmung der Frequenz und Phasenlage der Generator- und der Netzspannung bzw. der Differenz Frequenzen und Phasenlagen dieser Spannungen, mit einem Mittel (6, 7, 9, 10, 11) zum Steuern der Generatorspannung durch Steuerung der Erregung und mit einem Mittel zum Anschalten des Generators an das Netz, wobei das Mittel (8) zur Bestimmung der Frequenz und der Phasenlage bzw. der Differenz der Frequenz und der Phasenlage dazu eingerichtet ist, ein Ausgangssignal zu liefern, **dadurch gekennzeichnet, daß** dieses Ausgangssignal (Fr.Diff., Fr.Diff.1) dem Mittel (6, 7, 9, 10, 11) zum Steuern der Erregerspannung bzw. des Erregerstromes des Generators zugeführt ist, wobei die Frequenz und/oder die Phasenlage der Generatorspannung ($U_{Gen}$) zufolge ihrer Abhängigkeit von den spannungsabhängigen Verlusten des Generators (1) beeinflußbar sind.

7. Einrichtung nach Anspruch 6, **dadurch gekennzeichnet, daß** das Mittel (8) zur Bestimmung der Frequenz und der Phasenlage bzw. der Differenz der Frequenz und Phasenlage dazu eingerichtet ist, ein Ausgangssignal (Fr.Diff.2, Sp.Diff.2) zu liefern, welches an den Eingang eines Mittels (5, 12, 13, 14) zum Regeln der Drehzahl der mit dem Generator (1) verbundenen Antriebsmaschine in der Weise anlegbar ist, daß die Beeinflussung der Frequenz und Phasenlage der Generatorspannung ($U_{Gen}$) durch das Mittel (6, 7, 9, 10, 11) zum Steuern der Erregerspannung bzw. des Erregerstromes nicht oder gegebenenfalls in einem eingeschränkten Maß rückgängig gemacht wird.

8. Einrichtung nach Anspruch 6 oder 7, bei welcher das Mittel zur Bestimmung der Frequenz und Phasenlage bzw. der Differenz der Frequenz und Phasenlage dazu eingerichtet ist, ein Grobsignal zu liefern, welches einer Sollwerteinstellung eines Drehzahlreglers oder einer Öffnungsbegrenzung der mit dem Generator verbundenen Antriebsmaschine angelegt ist, und bei welcher das Mittel zur Bestimmung der Frequenz und Phasenlage bzw. der Differenz der Frequenz und Phasenlage dazu eingerichtet ist, ein Feinsignal zu liefern, welches dem Mittel zum Steuern der Erregerspannung bzw. des Erregerstromes zugeführt ist.

9. Einrichtung nach Anspruch 6, 7 oder 8, bei welcher ein Mittel (8) zur Bestimmung der Spannung bzw. der Spannungsdifferenz dazu eingerichtet ist, am Ausgang ein Signal (Sp.Diff.2) zu liefern, welches zur Nachregelung der Drehzahl der Antriebsmaschine an den Eingang des Mittels (4, 5) zum Regeln der Antriebsmaschinendrehzahl angelegt ist, soferne die Differenz der Netz- und Generatorspannung einen vorgegebenen Maximalwert erreicht oder überschreitet.

10. Einrichtung nach einem der Ansprüche 6 bis 9, bei welcher das Mittel (8) zur Bestimmung der Frequenz und Phasenlage bzw. der Differenz der Frequenz und Phasenlage ein Mittel (15) zum Modifizieren des einer Spannungsregelungseinrichtung zugeführten Generatorspannungs-Istwertes aufweist, mittels welchem der Istwert der Generatorspannung ($U_{Gen}$) in Abhängigkeit von der Frequenz und Phasenlage bzw. der Differenz der Frequenz und Phasenlage in der Weise modifizierbar ist, daß aufgrund der Differenz zwischen dem Generatorspannungs-Istwert (Netzspannung) und dem modifizierten Istwert der Generatorspannung ($U_{Gen}$) ein Ausgangssignal herstellbar ist, welches dem Mittel (6, 9, 10, 11) zum Steuern der Erregerspannung bzw. des Erregerstromes zuführbar ist, um die Frequenz und/oder die Phasenlage der Generatorspannung ($U_{Gen}$) zu beeinflussen.

11. Einrichtung nach Anspruch 10, bei welcher das Mittel zum Modifizieren (15) durch anschaltbare Widerstände gebildet ist.

Fig. 1

U-Gen., F-Gen.

U-Netz, F-Netz

Fr.Diff.

Sp.Diff.

Fig. 2

Fr.Diff.2

Fr.Diff.1

Sp.Diff.1

U-Gen., F-Gen.

U-Netz, F-Netz

1

2

5

6

7

8

9

10

11

12

13

14

EP 0 940 902 A1

8

3

4

5

7

2

1

Fr.Diff.

Sp.Diff.2

9

10

6

Sp.Diff.1

11

+   +

−

U−Gen.,  F−Gen.

U−Netz,  F−Netz

Fig. 3

U-Gen., F-Gen.

Fr.Diff.

Sp.Diff.

U-Netz, F-Netz

Fig. 4

EP 0 940 902 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PATENT ABSTRACTS OF JAPAN vol. 07, no. 11 [022], 29. November 1996 & JP 08 172723 A (OSAKA GAS CO LTD ET AL), 2. Juli 1996 * Zusammenfassung * --- | 1,5,6,10 | H02J3/42 H02P9/14 |
| A | DE 19 21 179 B (SIEMENS A.G.) 12. Juli 1973 * Anspruch 1 * --- | 1,5,6,10 | |
| A | DE 20 36 363 B (BBC A.G.) 23. März 1978 * Ansprüche 1-4 * --- | 1,5,6,10 | |
| A | DE 42 18 298 A (MITSUBISHI DENKI K.K.) 10. Dezember 1992 * Zusammenfassung * ----- | 1,5,6,10 | |

RECHERCHIERTE SACHGEBIETE (Int.Cl.6)

H02J
H02P

Der vorliegende Recherchenbericht wurde für alle Patentansprüche erstellt

| Recherchenort | Abschlußdatum der Recherche | Prüfer |
|---|---|---|
| WIEN | 21. Mai 1999 | MEHLMAUER |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**EP 0 940 902 A1**

**ANHANG ZUM EUROPÄISCHEN RECHERCHENBERICHT
ÜBER DIE EUROPÄISCHE PATENTANMELDUNG NR.**　　　EP 99 10 3166

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-1999

| Im Recherchenbericht angeführtes Patentdokument | Datum der Veröffentlichung | Mitglied(er) der Patentfamilie | Datum der Veröffentlichung |
|---|---|---|---|
| DE 1921179 B | 12-11-1970 | DE 1921179 A | 12-11-1970 |
| DE 2036363 B | 04-11-1971 | CH 514948 A | 31-10-1971 |
|  |  | DE 2036363 A | 04-11-1971 |
|  |  | FR 2089840 A | 07-01-1972 |
|  |  | SE 366879 B | 06-05-1974 |
|  |  | US 3784896 A | 08-01-1974 |
| DE 4218298 A | 10-12-1992 | JP 2738605 B | 08-04-1998 |
|  |  | JP 5006232 A | 14-01-1993 |
|  |  | CA 2063643 A,C | 05-12-1992 |
|  |  | GB 2256509 A,B | 09-12-1992 |
|  |  | US 5206580 A | 27-04-1993 |

Für nähere Einzelheiten zu diesem Anhang : siehe Amtsblatt des Europäischen Patentamts, Nr.12/82